(19) Europäisches Patentamt
European Patent Office
Office européen des brevets

(11) **EP 2 805 861 A2**

(12) **EUROPÄISCHE PATENTANMELDUNG**

(43) Veröffentlichungstag:
26.11.2014 Patentblatt 2014/48

(51) Int Cl.:
*B60W 40/13* *(2012.01)*

(21) Anmeldenummer: **14169818.3**

(22) Anmeldetag: **26.05.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **24.05.2013   CH 10072013**

(71) Anmelder: **Ing. Büro M. Kyburz AG**
**8427 Freienstein (CH)**

(72) Erfinder: **Bornatico, Raffaelle**
**6948 Porza (CH)**

(74) Vertreter: **Schneider Feldmann AG**
**Patent- und Markenanwälte**
**Beethovenstrasse 49**
**8002 Zürich (CH)**

(54) **Fahrzeugüberwachungsverfahren von Fahrzeugen durch Massenbestimmung**

(57)   Bei einem Fahrzeugüberwachungsverfahren eines Fahrzeuges, wobei die Fahrzeugmasse in Echtzeit während des Betriebs des Fahrzeuges bestimmt wird, wobei das Fahrzeug mit einer Fahrzeugrechnereinheit mit mindestens einer Sensoreinheit und einer Sendeeinheit ausgestattet ist und die Fahrzeugrechnereinheit mit einer Auswerterechnereinheit kommuniziert, wobei eine periodische Aufnahme von Istwerten von Sensoren durch die Sensoreinheit der Fahrzeugrechnereinheit erfolgt und auf eine Benutzung eines Massensensors verzichtet wird, soll ohne Einsatz weiterer oder spezieller Sensoren, sowie mit einfachen mathematischen Methoden die Reichweite des Fahrzeuges und/oder den Zeitpunkt eines nächsten Servicebesuches bestimmt werden. Dies wird dadurch erreicht, dass mittels fester Reifengrösse ($rw$), gemessener Übersetzung ($G$), sowie berechnetem Motordrehmoment ($\tau$) die aktuelle Traktionskraft ($Ftrac$) ermittelt wird, sodass nach Division der aktuellen Beschleunigung ($\ddot{x}$) durch die berechnete Traktionskraft ($Ftrac$) die aktuelle Fahrzeugmasse ($mident$) während eines Beschleunigungsvorganges zur Zeit berechnet wird und die bestimmten Fahrzeugmassen ($mident$) während des Betriebes des Fahrzeuges protokolliert werden.

FIG. 1

EP 2 805 861 A2

## Beschreibung

### Technisches Gebiet

Die vorliegende Erfindung beschreibt ein Fahrzeugüberwachungsverfahren eines Fahrzeuges, wobei die Fahrzeugmasse in Echtzeit während des Betriebs des Fahrzeuges bestimmt wird, wobei das Fahrzeug mit einer Fahrzeugrechnereinheit mit mindestens einer Sensoreinheit und einer Sendeeinheit ausgestattet ist und die Fahrzeugrechnereinheit mit einer Auswerterechnereinheit kommuniziert, wobei eine periodische Aufnahme von Istwerten von Sensoren durch die Sensoreinheit der Fahrzeugrechnereinheit erfolgt und auf eine Benutzung eines Massensensors verzichtet wird, sowie die Verwendung eines solchen Fahrzeugüberwachungsverfahrens.

### Stand der Technik

Seit geraumer Zeit werden Fahrzeuge einer Fahrzeugflotte mit einer Vielzahl von Sensoren ausgestattet, welche aktuelle Daten jedes Fahrzeuges sammeln.

Aus der EP2166513 geht ein Verfahren hervor, welches die aktuellen Zustände von Fahrzeugen einer Flotte als Istwert mittels einer Sensoreinheit und einer Fahrzeugrechnereinheit protokolliert. Die Istwerte werden drahtlos an eine vom Fahrzeug entfernte Servicerechnereinheit weitergeleitet. Bekannte aufnehmbare Istwerte umfassen Positionsdaten des Fahrzeuges, aktuelle Motortemperatur, aktuelle Emission, aktueller Reifendruck und Resttreibstoffmenge.

In Echtzeit kann beispielsweise ausgelesen werden wo und mit welcher aktuellen Geschwindigkeit, Beschleunigung in allen drei Raumrichtungen (X/Y/Z), aktueller Kühlkörpertemperatur oder Batterietemperatur etc. ein Flottenfahrzeug unterwegs ist. Durch ein solches Fahrzeugüberwachungsverfahren kann beispielsweise der Energieverbrauch je nach Fahrtroute bestimmt werden. Ebenso kann bestimmt werden, wie viel Wegstrecke seit dem letzten Servicebesuch zurückgelegt wurde und ob die Istwerte der Fahrzeugparameter noch den Sollwerten entsprechen.

Die Fahrzeugrechnereinheit oder die Servicerechnereinheit ermittelt durch Auswertung der Istwerte den Energieverbrauch des Fahrzeuges in Relation zur gefahrenen Tour. Durch Analyse der Istwerte und den Abweichungen von gespeicherten Sollwerten, können Empfehlungen, beispielweise für den nächsten Servicebesuch gegeben werden.

Mit Hilfe dieses Fahrzeugüberwachungsverfahrens kann die Wirtschaftlichkeit einer Fahrzeugflotte gesteigert werden, da es zu keinen unerwarteten Ausfällen von Fahrzeugen kommen kann, da diese ständig überwacht werden.

Aus dem Stand der Technik sind Fahrzeugüberwachungsverfahren einer Flotte von Fahrzeugen bekannt, die Messwerte von Motorparametern, des aktuellen Treibstoffes (Benzinverbrauch aber auch Stromverbrauch), der momentanen Fahreigenschaften (Beschleunigung, Geschwindigkeit) oder den aktuellen Reifendruck aufnehmen und auswerten.

Die Fahrzeugüberwachungsverfahren sind in der Lage Empfehlungen für die Notwendigkeit eines nächsten Servicebesuches bzw. direkte Bestimmung eines Servicetermins abzugeben, je nach Abweichung der Istwerte von bekannten Sollwerten.

### Darstellung der Erfindung

Die vorliegende Erfindung hat sich zur Aufgabe gestellt ein Fahrzeugüberwachungsverfahren bereitzustellen, welches ohne Einsatz weiterer oder spezieller Sensoren, sowie mit einfachen mathematischen Methoden die Reichweite des Fahrzeuges und/oder den Zeitpunkt eines nächsten Servicebesuches bestimmen kann.

Ohne Hinzunahme weiterer spezieller und kostspieliger Messsensoren, sollen weiterführende Schlüsse aus den Messwerten der bereits verwendeten Sensoren gezogen werden, welche eine verbesserte Reichweitenbestimmung und/oder die Einschätzung der Notwendigkeit bzw. des Zeitpunktes des nächsten Servicebesuchs erlauben.

Da keine weiteren Sensoren hinzugenommen werden müssen, vereinfacht sich die Komplexität der Boardelektronik und letztendlich auch der Ressourcenverbrauch des Fahrzeuges, da nur die Auswertung bekannter Messwerte durchgeführt werden muss.

Diese Aufgaben werden durch die Verwendung von Standardsensoren und Nutzung effizienter mathematischer Methoden gelöst, sodass Rechenzeit für die Sensordatenauswertung minimal gehalten werden kann. Man kommt mit geringen Datenströmen aus und verwendet einfache und schnell verarbeitbare Rechenoperationen.

### Kurze Beschreibung der Zeichnungen

Das erfindungsgemässe Verfahren wird nachstehend anhand von durchgeführten Versuchen basierend auf den anliegenden Zeichnungen beschrieben.

Figur 1      zeigt ein Geschwindigkeits-Zeit-Diagramm von insgesamt vier Beschleunigungsversuchen (1 bis 4) eines ersten Testblockes, während in

Figur 2    insgesamt sechs Beschleunigungsvorgänge (5 bis 10) eines Fahrzeuges, innerhalb eines zweiten Testblockes aufgenommen, in einem Geschwindigkeits-Zeit-Diagramm gezeigt sind.

Figur 3    zeigt die Geschwindigkeits-Zeit-Kurve aufgenommen während des ersten Beschleunigungsvorganges des ersten Testblockes in einer Detailansicht, wobei auch das Messfenster in welchem die Beschleunigungs- und Motordrehmomentwerte für die Massenbestimmung aufgenommen werden, dargestellt ist.

Figur 4    zeigt die vier bestimmten tatsächlichen Fahrzeugmassen eines Fahrzeuges mit Fahrer und Passagier mit zugehöriger Fehlerabschätzung der Beschleunigungsvorgänge des ersten Testblockes, während

Figur 5    die Fahrzeugmassen resultierend aus den Beschleunigungsvorgängen des zweiten Testblockes mit zugehöriger Fehlerabschätzung zeigt, wobei das Fahrzeug mit Fahrer bzw. mit Fahrer und Passagier beladen war.

**Beschreibung**

Das vorliegende Fahrzeugüberwachungsverfahren wird beispielhaft anhand eines Elektrofahrzeuges, welches Teil einer Flotte einer Mehrzahl von Elektrofahrzeugen sein kann, beschrieben. Die hier beschriebenen Elektrofahrzeuge können Teil einer Flotte von Fahrzeugen eines Distributors beispielsweise eines Postdienstleisters sein, welche jeweils täglich etwa gleiche bekannte Fahrtrouten befahren. Neben Elektrofahrzeugen können auch anders betriebene Fahrzeuge verwendet werden, die Teil einer beliebigen Flotte von Fahrzeugen sind.

Das Elektrofahrzeug weist eine Fahrzeugrechnereinheit auf, welche am Elektrofahrzeug befestigt ist und ständig mitgeführt wird (on board unit). Mit der Fahrzeugrechnereinheit ist mindestens eine Sensoreinheit verbunden, wobei die gemessenen Signale der Sensoreinheit an die Fahrzeugrechnereinheit geleitet werden. Diese Sensoren liefern aktuelle Istwerte unterschiedlicher Parameter während des Betriebs des Elektrofahrzeuges.

Um ein Fahrzeugüberwachungsverfahren ohne Verwendung eines speziellen Massesensors zu erreichen, wird die aktuelle Masse des Elektrofahrzeuges zur Zeit, die Massenänderung während einer Wegstrecke und der daraus resultierende Energieverbrauch mittels bekannter und bereits eingesetzter Sensoren ermittelt. Durch die Speicherung der während einer Zeitspanne bewegten Gesamtmasse kann der Zeitpunkt eines nächsten Servicebesuches bestimmt werden.

Beispielhaft wurde ein elektrisch betriebener Ford Transit eingesetzt und Istwerte während der Fahrt mittels einer Reihe von Sensoren aufgenommen. Die Fahrzeugmasse wurde durch Verwendung der Istwerte in einem definierten Algorithmus aufgrund der gemessenen Fahreigenschaften bestimmt. Damit konnte die jeweilige Fahrzeugmasse während des Betriebes in Echtzeit bestimmt werden, mittels welcher auf die mögliche Reichweite des Fahrzeuges geschlossen werden konnte. Obwohl einfache Modellrechnungen genutzt wurden, konnte die Fahrzeugmasse mit einem Fehler von kleiner 4% ermittelt werden.

Die Spezifikationen des Testfahrzeuges sind in Tabelle 1 aufgeführt.

*Tabelle 1: Spezifikationen Testfahrzeug*

| Leergewicht (m) | 1811 kg |
|---|---|
| Batterieleistung | 28 kWh |
| Batterieart | JC-Saft Li-Ion |
| Maximale Reichweite | 80-128 km |
| Maximale Geschwindigkeit | 120 km/h |
| Motorleistung (peak) | 105 kW |
| Motordrehmoment (peak) | 292 Nm |
| Frontfläche (mit Spiegeln) | 4.25 m2 |
| Reifen → Reifenradius $rw$ | P205/65R15 BSW |

Alle Sensormesswerte bzw. Istwerte werden an die Fahrzeugrechnereinheit weitergeleitet und können dort gespeichert werden.

Die hier interessierenden Istwerte, welche in einer definierten Frequenz und Auflösung gemessen werden, sind in Tabelle 2 dargestellt. Es wurden die entsprechenden Sensoren verwendet und mit der Sensoreinheit verbunden. Mit der angegebenen Frequenz wurden die Sensoren ausgelesen und die zugehörigen Istwerte aufgenommen.

*Tabelle2: Aufgenommene Messsignale*

| Signal | Einheit | Auflösung | ~Frequenz (Hz) |
|---|---|---|---|
| Geschwindigkeit | km/h | 0.01 | 100 |
| Motordrehmoment $\tau$ | Nm | 1 | 50 |
| Akkuladezustand | % | 0.5 | 25 |
| Energie | kWh | 0.1 | 0.2 |
| Batteriespannung | V | 0.1 | 10 |
| Strom | A | 0.1 | 10 |
| Distanz | km | 1 | 50 |

Die Istwerte werden mit einer Sendeeinheit an eine Auswerterechnereinheit weitergeleitet, wo weiterverarbeitete Istwerte mittels Algorithmen erzeugt werden. Die lokale Sendeeinheit arbeitet mit der Fahrzeugrechnereinheit zusammen. Die Auswerterechnereinheit kann entweder lokal am Fahrzeug angeordnet sein oder extern getrennt vom Fahrzeug, aber über eine Datenleitung mit der Fahrzeugrechnereinheit verbunden, angeordnet sein.

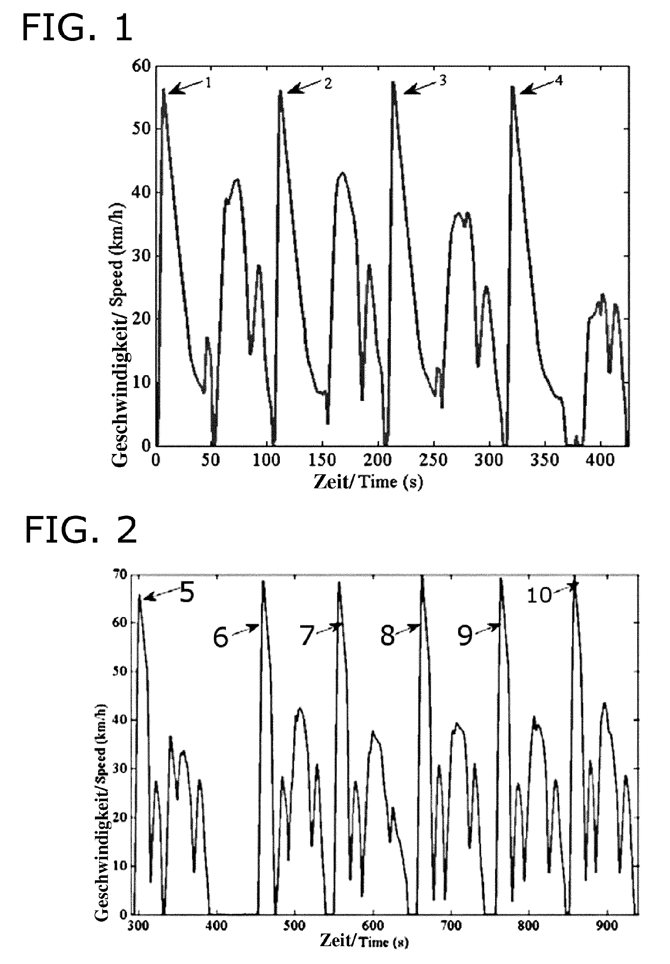

In einem ersten Testblock wurden vier Beschleunigungsvorgänge durchgeführt und die aufgezeichneten Ergebnisse der Geschwindigkeits-Zeit-Messungen sind in Figur 1 dargestellt. In den vier Versuchen wurde jeweils auf eine Geschwindigkeit von etwa 55 km/h beschleunigt und danach abgebremst. Die Geschwindigkeit zu jeder Zeit wurde aufgezeichnet. Das Gewicht des Fahrzeugs m inklusive einem Fahrer (mf=86Kg) und einem Passagier (mp=76Kg) blieb während des Testblockes konstant.

Weitere sechs Beschleunigungs- und Bremsvorgänge wurden entsprechend in einem zweiten Testblock durchgeführt, wobei auf Geschwindigkeiten zwischen 60km/h und 70 km/h beschleunigt wurde. Die aufgezeichneten Ergebnisse sind in Figur 2 dargestellt. Die Versuche 5, 7 und 9 wurden erneut bei einem konstanten Fahrzeuggewicht inklusive Fahrer und Passagier (m+mf(=86Kg)+mp(=76Kg)) durchgeführt, während die Versuche 6, 8 und 10 das Gewicht des Fahrzeuges und des Fahrers (m+mf=86Kg) umfassten.

Aus denen bei den Beschleunigungs- und Bremsvorgängen gemessenen Werten kann die aktuelle Fahrzeugmasse inklusive Fahrer und Passagier bestimmt werden.

Neben dem Leergewicht des Fahrzeuges m, wird ein Massenäquivalent *mequiv* eingeführt, welches vereinfacht wie folgt aussieht:

$$mequiv = m \cdot (1 + a1 + a2 \cdot G^{a3})$$

(wobei a1 = 0.04; a2 = 0.0025; a3 = 2 und G = 7.6)

Aufgrund der Trägheitskräfte rotierender Teile des Fahrzeuges ergibt sich ein Massenäquivalent *mequiv*, welches geringfügig grösser ist, als das Leergewicht m. G ist die Übersetzung als dimensionslose Verhältniszahl und wird für die Rechnung hier aufgrund von Berechnungen zu 7.6 angenommen.

Mittels eines einfachen Algorithmus kann die aktuelle tatsächliche Fahrzeugmasse *mident,* mit Fahrer bzw. mit Fahrer und Passagier ermittelt werden, wobei aus dem 2. Axiom von Newton die folgende Gleichung resultiert:

$$m_{ident} = \frac{\ddot{x}}{F_{trac}} \qquad (1)$$

,wobei

$$F_{trac} = \frac{\tau \cdot G}{r_w}$$

ist.

Zuerst wird die Traktionskraft $F_{trac}$ bestimmt. Dazu wird die feste Reifengrösse $r_w$ verwendet, die Übersetzung G, sowie das Motordrehmoment $\tau$ gemessen bzw. berechnet und damit die aktuelle Traktionskraft $F_{trac}$ ermittelt. Im einfachsten Fall kann das Motordrehmoment $\tau$ mit einem entsprechenden Sensor ausgelesen werden.

Dividiert man die aktuell bestimmte Beschleunigung durch die Traktionskraft $F_{trac}$ entsprechend Gleichung (1), dann erhält man die aktuelle tatsächliche Fahrzeugmasse $m_{ident}$ zur Zeit und damit in Echtzeit.

Die tatsächliche Fahrzeugmasse $m_{ident}$ setzt sich aus dem Beitrag *mequiv* und jeweils der Masse eines Fahrers bzw. der Massen eines Fahrers und Passagiers zusammen.

Zur optimierten Massenbestimmung der Fahrzeugmasse in Echtzeit können zehn Einzelschritte durchgeführt, welche im Folgenden erläutert werden.

1. Aufnahme der Rohdaten der gemessenen aktuellen Geschwindigkeit zur Zeit.
2. Automatische Beseitigung offensichtlicher Anomalien, die vom Bussystem (hier CAN-Bus (Controller Area Network)-Bus) aufgenommen wurden.
3. Konvertierung der Messsignale in eine Zeitreihe und Synchronisierung
4. Berechnung der Beschleunigung und der Traktionskraft als Tangentialkraft zwischen Reifen und Strasse, wobei die Richtungsvektoren der Beschleunigung und der Traktionskraft parallel zur Fahrbahn gerichtet sind und damit in Bewegungsrichtung gerichtet sind und Kräfte im Massenschwerpunkt des Fahrzeuges wirken.
5. Analysieren der aufgenommenen Signale durch wiederholen der Schritte 1 bis 4.
6. Beschleunigungspeaks automatisch durch Funktion finden.
7. Analyse der Stabilität der Motordrehmoment und Beschleunigungssignale, wobei ein Messfenster erst dann geöffnet wird, sobald 20-50 aufeinanderfolgende Messungen bzw. Berechnungen der Werte des Motordrehmomentes und/oder der Beschleunigung höchstens um einen Faktor $\varepsilon$ von einem Stabilitätsgrenzwert abweichen, wobei das Messfenster bei einer grösseren Abweichungen vom Stabilitätsgrenzwert wieder geschlossen wird. Hier wird $\varepsilon = 0.4$ gesetzt.
8. Beschleunigung und Motordrehmoment werden berechnet durch Mittelung der im Messfenster ermittelten Messwerte.
9. Vergleich der berechneten Beschleunigungs- und Motordrehmomentwerte mit physikalisch möglichen Grenzwerten und Löschen der Daten, welche physikalische Grenzen überschreiten und einen Hinweis auf einen Fehler im Datenerfassungssystem darstellen. (z.B. Masse kleiner oder gleich null, Masse kleiner als Leermasse, Beschleunigung von 0 auf 100 km/h schneller als 1 Sekunde)
10. Bestimmung des Ergebnisses der Gleichung 1.

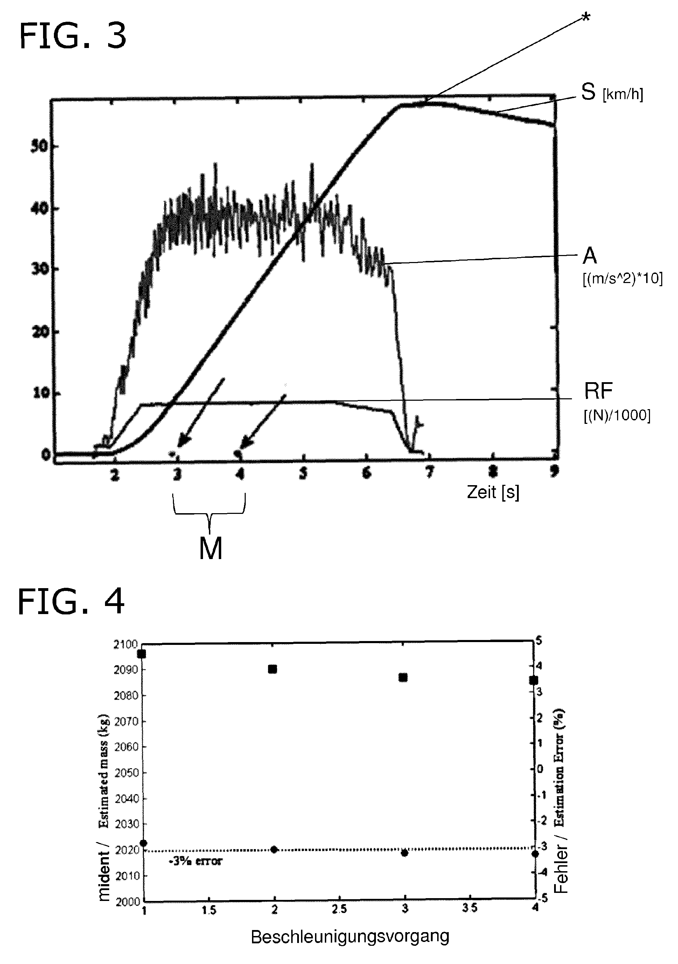

In Figur 3 ist beispielhaft ein Diagramm gezeigt, welches aufgenommene Messsignale, sowie berechnete Grössen während des ersten Beschleunigungsvorganges 1, wie in Figur 1 dargestellt des Testblocks 1 zeigt.

Die Kurve S zeigt die jeweilige Geschwindigkeit in km/h, wobei das Fahrzeug aus dem Stand mit einer Geschwindigkeit von 0km/h bis zu einer Maximalgeschwindigkeit * bei etwa 55 km/h beschleunigt wird. Die Kurve A zeigt die während der abgebildeten Phase ermittelten Beschleunigungswerte. Die Traktionskraft als Tangentialkraft zwischen Reifen und Strasse parallel zur Fahrbahn gerichtet ist der Kurve RF zu entnehmen. Das Messfenster M, in welchem die Stabilität der Motordrehmoment und Beschleunigungssignale für eine exakte Massenbestimmung erreicht ist, liegt zwischen den beiden mit Pfeilen markierten Zeitpunkten. Die Stabilität ist für etwa eine Sekunde während des etwa sieben Sekunden dauernden Beschleunigungsvorganges erreicht worden.

Das Ziel ist, ein möglichst grosses Messfenster M zu erreichen, wodurch die Bestimmung der Fahrzeugmasse mit grösserer Genauigkeit erreichbar ist. Es wird jeweils über die Messwerte bzw. errechneten Werte innerhalb des Messfensters gemittelt, um eine möglichst genaue Massenbestimmung zu erreichen und den Einfluss von Störungen oder Rauschen im Messverfahren zu verringern.

Die erreichbare Abweichung bestimmter tatsächlicher Fahrzeugmassen in einem Testblock von vier Beschleunigungsvorgängen ist in Figur 4 dargestellt. Es wurden vier geringfügig unterschiedliche tatsächliche Fahrzeugmasse ermittelt. Der relative Fehler der Massenbestimmung lag unterhalb von 4%.

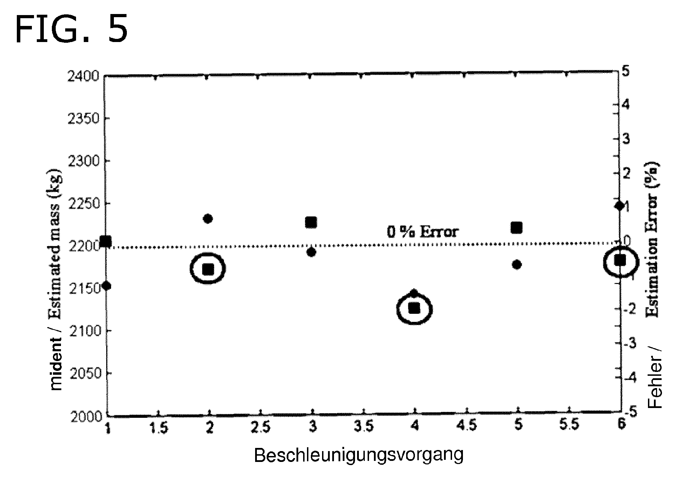

In Figur 5 sind aus weiteren sechs durchgeführten Beschleunigungsvorgängen bestimmte tatsächliche Fahrzeugmassen mit zugehörigen Fehlergrenzen dargestellt. Die eingekreisten Ergebnisse stellen Fahrzeugmassen dar, wobei die Fahrzeuge von einem Fahrer gefahren wurden, sodass das *mequiv* und das Gewicht des Fahrers einging. Die zugehörigen relativen Fehler der Fahrzeugmassen sind durch Punkte dargestellt. Die nicht eingekreisten durch quadratische Punkte dargestellten Fahrzeugmassen stellen ermittelte tatsächliche Fahrzeugmassen eines Fahrzeuges mit *mequiv* + Masse des Fahrers und Passagiers, wie oben beschrieben dar. Entsprechend liegen diese Fahrzeugmassen bei höheren Werten als die eingekreisten Messwerte. Der relative Fehler aller Messungen liegt unterhalb von 1.5%.

Mit Hilfe des Fahrzeugüberwachungsverfahrens wird die Massendifferenz des Fahrzeuges bei durchgeführten Fahrten bzw. in einem bestimmten Zeitraum bestimmt. Durch Kenntnis der Fahrzeugmasse bzw. des vom Fahrzeug bewegten Gewichtes kann die mögliche Reichweite des Fahrzeuges genauer hochgerechnet werden. In eine solche Hochrechnung geht der Energieverbrauch aufgrund der tatsächlich bewegten Masse ein. Die genauer bestimmte resultierende Reichweite wird dem Fahrer angezeigt.

Aus der Bestimmung der bewegten Gesamtmasse in einem Zeitraum durch kontinuierliche Massenbestimmung kann automatisch beurteilt werden, wie schnell ein nächster Servicetermin notwendig ist. Aus bereits durchgeführten Messungen ist bekannt, dass ein Fahrzeug nach der Beförderung einer bestimmten Gesamtmasse zur Inspektion bzw. Revision vorgeführt werden sollte. Das gezielte Nutzen kontinuierlich erfasster Daten in Form der Istwerte jedes Fahrzeuges und der ständige Vergleich mit zu erwartenden Sollwerten für jedes Elektrofahrzeug optimiert die Servicetermine.

Alle gemessenen Sensormesswerte sowie die weiterverarbeiteten Sensormesswerte können als Istwerte auf einer Anzeigeeinheit des Elektrofahrzeuges lokal angezeigt und/oder in der Fahrzeugrechnereinheit gespeichert werden.

Von der Auswerterechnereinheit können Istwerte und weiterverarbeitete Messwerte an eine externe Servicerechnereinheit (Maintenance Server Unit) via eine Empfängereinheit drahtlos weitergeleitet werden. Für die Datenübermittlung zwischen Auswerterechnereinheit und Empfängereinheit der Servicerechnereinheit ist eine Vielzahl bekannter Übermittlungstechnologien einsetzbar. Dies gilt auch für die Datenübertragung zwischen Fahrzeugrechnereinheit und Auswerterechnereinheit via Sendeeinheit. Dabei kann die Datenübertragung per Kabel oder drahtlos erfolgen.

Durch die Verwendung von Verkehrstelematiksystemen, beispielsweise eines GPS-Empfängers eines GPS-Systems als Teil der Sensoreinheit kann der aktuelle Ort eines Elektrofahrzeuges mit Längen- und Breitengradangabe, sowie Höhenangabe exakt bestimmt werden. Der mindestens eine GPS-Empfänger leitet die erfassten geographischen Positionsdaten an die Fahrzeugrechnereinheit weiter, wo sie gespeichert werden können. Aufgrund der geographischen Positionsdaten können die üblichen Informationen über jedes Elektrofahrzeug beispielsweise betreffend gefahrene Strecke, Höhenprofil der gefahrenen Strecke, sowie die erwartete Fahrzeit zum Endziel bestimmt werden.

## Patentansprüche

1.  Fahrzeugüberwachungsverfahren eines Fahrzeuges, wobei die Fahrzeugmasse in Echtzeit während des Betriebs des Fahrzeuges bestimmt wird,
    wobei das Fahrzeug mit einer Fahrzeugrechnereinheit mit mindestens einer Sensoreinheit ausgestattet ist und die Fahrzeugrechnereinheit mit einer Auswerterechnereinheit kommuniziert, wobei eine periodische Aufnahme von Istwerten von Sensoren durch die Sensoreinheit der Fahrzeugrechnereinheit erfolgt und auf eine Benutzung eines Massensensors verzichtet wird,
    **dadurch gekennzeichnet, dass**
    mittels fester Reifengrösse ($r_w$), gemessener Übersetzung (G), sowie berechnetem Motordrehmoment ($\tau$) die aktuelle Traktionskraft ($F_{trac}$) ermittelt wird, sodass nach Bestimmung der aktuellen Beschleunigung ($\ddot{x}$) und anschliessender Division der aktuellen Beschleunigung ($\ddot{x}$) durch die berechnete Traktionskraft ($F_{trac}$) die aktuelle Fahrzeugmasse ($M_{ident}$) gemäss

$$m_{ident} = \frac{\ddot{x}}{F_{trac}}$$

    während eines Beschleunigungsvorganges zur Zeit berechnet wird und während des Betriebes des Fahrzeuges bestimmte Fahrzeugmassen ($m_{ident}$) protokolliert, gespeichert und/oder versendet werden.

2.  Fahrzeugüberwachungsverfahren eines Fahrzeuges nach Anspruch 1, **wobei** die aktuelle Beschleunigung ($\ddot{x}$) mittels Beschleunigungssensor der Sensoreinheit direkt gemessen wird.

3.  Fahrzeugüberwachungsverfahren eines Fahrzeuges nach Anspruch 1, **wobei** die aktuelle Beschleunigung ($\ddot{x}$) durch Berechnung aus der zeitlichen Entwicklung der in einem Geschwindigkeitssensor gemessenen Geschwindigkeitswerte in einem Zeitintervall bestimmt wird.

4.  Fahrzeugüberwachungsverfahren eines Fahrzeuges nach Anspruch 1, **wobei** die aktuellen Beschleunigungs- und Motordrehmomentwerte durch Mittelung über die während des Messfensters ermittelten Messwerte oder Filterung der während des Messfensters aufgenommenen Daten erfolgt.

5.  Fahrzeugüberwachungsverfahren eines Fahrzeuges nach Anspruch 4, **wobei**

- ein Messfenster zur Erfassung der Messsignale aus denen Motordrehmoment und Beschleunigung berechnet werden, bestimmt wird, anschliessend während des Messfensters
- Beschleunigung und Motordrehmoment berechnet werden und gemittelte Werte der Beschleunigung und des Motordrehmomentes durch Mittelung der im Messfenster ermittelten Messwerte zur Bestimmung von Ergebnissen der aktuellen Fahrzeugmasse $m_{ident}$ weiterverarbeitet werden.

6. Fahrzeugüberwachungsverfahren eines Fahrzeuges nach Anspruch 5, **wobei**
das Messfenster zur Erfassung der für die Massenbestimmung relevanten Sensormesswerte nur dann geöffnet wird, wenn 20 bis 50 aufeinanderfolgende Werte des Motordrehmomentes und/oder der aktuellen Beschleunigungswerte höchstens um einen Faktor von 0.4 von einem Stabilitätsgrenzwert abweichen.

7. Fahrzeugüberwachungsverfahren eines Fahrzeuges nach Anspruch 6, **wobei**
das Messfenster geschlossen wird, wenn der Werte des gemessenen Motordrehmomentes und/oder der aktuellen Beschleunigungswerte von dem Stabilitätsgrenzwert um mehr als einen Faktor 0.4 abweicht.

8. Fahrzeugüberwachungsverfahren eines Fahrzeuges nach einem der vorhergehenden Ansprüche, **wobei**
zur Kontrolle die bestimmten Beschleunigungs- und Motordrehmomentwerte mit physikalisch möglichen Grenzwerten verglichen werden und unmögliche Werte aussortiert werden.

9. Fahrzeugüberwachungsverfahren eines Fahrzeuges nach Anspruch 3, **wobei** die Berechnung der Beschleunigung und der Traktionskraft tangential zwischen Reifen und Strasse erfolgt, wobei die Richtungsvektoren der Beschleunigung und der Traktionskraft parallel zur Fahrbahn und damit in Bewegungsrichtung gerichtet sind.

10. Fahrzeugüberwachungsverfahren eines Fahrzeuges nach einem der vorhergehenden Ansprüche, **wobei** die Datenübertragung zwischen Fahrzeugrechnereinheit und Auswerterechnereinheit über eine Sendeeinheit erfolgt.

11. Verwendung eines Fahrzeugüberwachungsverfahrens gemäss einem der vorhergehenden Ansprüche, **wobei** die Bestimmung der tatsächlichen Fahrzeugmasse zur verbesserten Bestimmung der Reichweite des Fahrzeuges eingesetzt wird.

12. Verwendung eines Fahrzeugüberwachungsverfahrens gemäss einem der Ansprüche 1 bis 10, **wobei** die Bestimmung der bewegten Gesamtmasse in einem Zeitintervall zur Bestimmung des nächsten Servicetermins des Fahrzeuges genutzt wird.

# FIG. 1

# FIG. 2

# FIG. 3

S [km/h]

A
[(m/s^2)*10]

RF
[(N)/1000]

Zeit [s]

M

# FIG. 4

mident / Estimated mass (kg)

-3% error

Fehler / Estimation Error (%)

Beschleunigungsvorgang

# FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2166513 A